# EUROPEAN PATENT APPLICATION

(11) **EP 3 910 884 A1**
(43) Date of publication of application: **17.11.2021**
(21) Application number: 20738996.6
(22) Date of filing: 09.01.2020
(51) Int. Cl.: H04L 12/28, H04L 12/717

(54) **VEHICLE CONTROL DEVICE, VEHICLE NETWORK DESIGNING DEVICE, COMMUNICATION METHOD, AND PROGRAM**

(30) Priority: 10.01.2019 JP 2019002832
(71) Applicant: NEC Communication Systems, Ltd., Minato-ku Tokyo 108-0073 (JP)
(72) Inventor: BABA, Yuki, Tokyo 108-0073 (JP); MATSUMOTO, Akira, Tokyo 108-0073 (JP); ITO, Tetsuya, Tokyo 108-0073 (JP); ITO, Chikashi, Tokyo 108-0073 (JP); KAWATSU, Tetsuji, Tokyo 108-0073 (JP); NOMURA, Takumi, Tokyo 108-0073 (JP); AKIZUKI, Katsuyuki, Tokyo 108-0073 (JP); HARADA, Yuji, Tokyo 108-0073 (JP)
(74) Representative: Betten & Resch
(86) International application number: PCT/JP2020/000409
(87) International publication number: WO 2020/145334

(57) **Abstract**

There is provided an in-vehicle control apparatus that can flexibly change a configuration of a vehicle network. The in-vehicle control apparatus controls a plurality of repeaters included in an in-vehicle network assembled in a vehicle, based on a control scenario(s) associated with states of the vehicle and control contents, each of which is set in a corresponding one of the plurality of repeaters. When a state of the vehicle is changed, the in-vehicle control apparatus may refer to the control scenario(s) and control the plurality of repeaters. The in-vehicle control apparatus may visualize a status of the vehicle network.

## Description

### TECHNICAL FIELD

### [REFERENCE TO RELATED APPLICATION]

The present invention is based upon and claims the benefit of the priority of Japanese patent application No. 2019-002832, filed on January 10, 2019, the disclosure of which is incorporated herein in its entirety by reference thereto.

The present invention relates to an in-vehicle control apparatus, an in-vehicle network design apparatus, a communication method, and a program.

### BACKGROUND ART

In recent years, along with the advancement in self-driving technology and increase in vehicle services, there has been an increasing demand for adding/updating a function of a vehicle in operation after the purchase of the vehicle. This addition/updating of a function can be realized by adding/switching an in-vehicle module or updating vehicle control software. However, since adding/updating a function changes the flow, the bandwidth, the priority level, or the like of a communication performed on an in-vehicle network, there is a demand for a technique for flexibly changing the network when a function is added/updated.

In addition, for example, when OTA (Over The Air) is performed to update vehicle control software, update data is first stored in a certain node in the vehicle and is next distributed to an update target node on an in-vehicle network from the certain node. However, it is not preferable in terms of security that the node distributing the update data and the update target node are able to communicate with each other in a state other than the OTA state. These nodes need to be separated so that these node cannot communicate with each other.

As described above, when a state of a vehicle is changed or a function of the vehicle is updated, a flow, a bandwidth, a priority level, or the like on a vehicle network is changed. Thus, a function of flexibly changing a configuration, a function, a specification, etc. of the network is needed. In response to the above demand, there has been proposed a method in which an SDN (Software Defined Network) is applied to a vehicle.

In an SDN, an SDN controller monitors communications on a network, and when a new communication occurs, a repeater (an SDN switch) on the network queries the SDN controller about a communication processing method. Based on the content of the query, the SDN controller calculates a processing method by performing path calculation or the like and sets the processing method (control information, packet handling rule) in the above repeater. Since the SDN controller comprehensively performs the monitoring, the path calculation, and the setting of the processing contents on the whole network, the SDN flexibly changes the network.

Patent Literature (PTL) 1 discusses checking of the validity of a path setting in a network system, in which the path setting is performed dynamically, within a short time. PTL 1 discloses that the validity of a path setting is checked by simulating an operation of a switch or an operation of a control apparatus.

PTL 2 discusses provision of a network visualization system in which a user can comprehensively grasp a configuration and an operation of a network.

### CITATION LIST

### PATENT LITERATURE

PTL 1: International Publication No. WO2014/174720A
PTL 2: Japanese Patent No. 5769208

### SUMMARY

### TECHNICAL PROBLEM

The disclosure of each literature in the above citation list is incorporated herein by reference thereto. The following analysis has been made by the present inventors.

As described above, there is an SDN as one network technique. In addition, discussion is under way on applying an SDN to an in-vehicle network.

However, if an SDN controller receives many queries and performs a path calculation each time, the required processing load of the SDN controller will be increased. Thus, this approach has a problem in that an in-vehicle microcomputer cannot sufficiently perform its required processing. PTLs 1 and 2 have no relation to a vehicle network, and the techniques disclosed by these literatures cannot solve the above problem.

A main object of the present invention is to provide an in-vehicle control apparatus, an in-vehicle network design apparatus, a communication method, and a program that contributes to flexibly changing a configuration of a vehicle network.

### SOLUTION TO PROBLEM

According to the present invention or a first disclosed aspect, there is provided an in-vehicle control apparatus, controlling a plurality of repeaters included in an in-vehicle network assembled in a vehicle, based on a control scenario(s) associated with states of the vehicle and control contents, each of which is set in a corresponding one of the plurality of repeaters.

According to the present invention or a second disclosed aspect, there is provided a vehicle network design apparatus, connectable to the above in-vehicle control apparatus and generating the control scenario(s).

According to the present invention or a third disclosed aspect, there is provided a communication method for an in-vehicle control apparatus for a vehicle in which a vehicle network including a plurality of repeaters is assembled, the communication method comprising steps of: referring to a control scenario(s) associated with states of an in-vehicle and control contents, each of which is set in a corresponding one of the plurality of repeaters; and controlling the plurality of repeaters based on the control scenario(s).

According to the present invention or a fourth disclosed aspect, there is provided a program, causing a computer for a vehicle in which a vehicle network including a plurality of repeaters is assembled to perform processing for: referring to a control scenario(s) associated with states of a vehicle and control contents, each of which is set in a corresponding one of the plurality of repeaters; and controlling the plurality of repeaters based on the control scenario(s).
This program can be recorded in a computer-readable storage medium. The storage medium may be a non-transient storage medium such as a semiconductor memory, a hard disk, a magnetic recording medium, or an optical recording medium. The present invention may be embodied as a computer program product.

### ADVANTAGEOUS EFFECTS OF INVENTION

According to the present invention and the individual disclosed aspects, there are provided an in-vehicle control apparatus, an in-vehicle network design apparatus, a communication method, and a program that contributes to flexibly changing a configuration of a vehicle network.

### BRIEF DESCRIPTION OF DRAWINGS

Fig. 1 is a diagram illustrating an outline according to an embodiment.
Fig. 2 is a diagram illustrating an example of an internal configuration of a vehicle according to a first example embodiment.
Fig. 3 is a diagram illustrating an example of an NW control scenario
table.
Fig. 4 is a diagram illustrating an example of an NW control content
table.
Fig. 5 is a diagram for describing operations of the vehicle according to the first example embodiment.
Fig. 6 is a flowchart illustrating an example of an operation of the vehicle according to the first example embodiment.
Fig. 7 is a diagram illustrating an operation of the vehicle according to the first example embodiment.
Fig. 8 is a diagram illustrating an example of a state of an NW part of the vehicle on which in-vehicle network control has been performed.
Fig. 9 is a diagram illustrating an operation of the vehicle according to the first example embodiment.
Fig. 10 s a diagram illustrating an example of the state of the NW part of the vehicle on which the in-vehicle network control has been performed.
Fig. 11 is a diagram illustrating an example of an internal configuration (a processing configuration) of an NW design apparatus according to a second example embodiment.
Fig. 12 is a flowchart illustrating an example of an operation of the NW design apparatus according to the second example embodiment.
Fig. 13 is a flowchart illustrating an example of an operation of the NW design apparatus according to the second example embodiment.
Fig. 14 is a flowchart illustrating an example of an operation of the NW design apparatus according to the second example embodiment.
Fig. 15 is a diagram illustrating an example of the connection between the NW design apparatus and an NW control apparatus according to the second example embodiment.
Fig. 16 is a diagram illustrating an example of an internal configuration (a processing configuration) of an NW design apparatus according to a third example embodiment.
Fig. 17 is a flowchart illustrating an example of an operation of the NW design apparatus according to the third example embodiment.
Fig. 18 is a diagram illustrating an example of an internal configuration of an NW design apparatus according to a fourth example embodiment.
Fig. 19 is a diagram illustrating an example of an internal configuration of an NW control apparatus according to the fourth example embodiment.
Fig. 20 is a flowchart illustrating an example of an operation of the NW control apparatus according to the fourth example embodiment.
Fig. 21 is a flowchart illustrating an example of an operation of the NW design apparatus according to the fourth example embodiment.
Fig. 22 is a diagram illustrating an example of an internal configuration of an NW design apparatus according to a fifth example embodiment.
Fig. 23 is a diagram illustrating an example of an internal configuration of an NW control apparatus according to the fifth example embodiment.
Fig. 24 is a flowchart illustrating an example of an operation of a system according to the fifth example embodiment.
Fig. 25 is a diagram illustrating an example of a hardware configuration of the NW control apparatus.

### DESCRIPTION OF EMBODIMENTS

First, an outline of an example embodiment will be described. In the following outline, various components are denoted by reference characters for the sake of convenience. Namely, the following reference characters are merely used as examples to facilitate understanding of the present invention. Thus, the description of the outline is not meant to place any limitations on the present invention. An individual connection line between blocks in an individual drawing signifies both one-way and two-way directions. An arrow schematically illustrates a principal signal (data) flow and does not exclude bidirectionality. While not explicitly illustrated in the circuit diagrams, the block diagrams, the internal configuration diagrams, the connection diagrams, etc. in the disclosure of the present application, an input port and an output port exist at an input end and an output end of an individual connection line. The same holds true for the input-output interfaces.

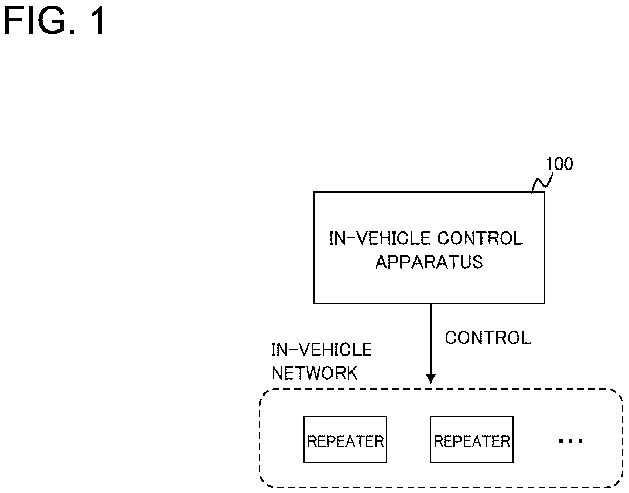

An in-vehicle control apparatus 100 according to an example embodiment controls a plurality of repeaters included in an in-vehicle network assembled in a vehicle, based on a control scenario associated with states of the vehicle and control contents, each of which is set in a corresponding one of the plurality of repeaters (see Fig. 1).

More specifically, the in-vehicle control apparatus 100 holds and manages control contents that need to be performed on combinations of a plurality of vehicle states and scenarios describing which control contents need to be referred to when a state of the vehicle is changed. The vehicle includes vehicle state detection means, and if a detection result of the vehicle state detection means indicates change of a vehicle state, the in-vehicle control apparatus 100 refers to a corresponding one of the above scenarios and controls the repeaters (switches included in the in-vehicle network) in accordance with the corresponding contents. As a result, the vehicle network is changed. Since the in-vehicle control apparatus 100 appropriately generates an individual scenario defining the control contents corresponding to vehicle states, the network can be controlled based on the vehicle states. That is, the configuration of the vehicle network can flexibly be changed. That is, it is possible to easily realize a network that is based on a flow, a bandwidth, a priority level, etc. on the vehicle network that changes when a vehicle state is changed or when a function of the vehicle is updated.

If a network in a vehicle malfunctions, an accident fatal to human lives could occur. Thus, the highest priority is given to the safety of the vehicle, and the functions of the vehicle are strictly evaluated in advance. However, since an SDN dynamically changes a network, it is difficult to presume what network is to be configured. That is, this approach has a problem in that the network cannot be evaluated in advance. In the case of the in-vehicle control apparatus 100, since the scenarios are sufficiently evaluated before the vehicle is operated (sold), the above problem can be solved. That is, by previously evaluating the network that has been changed in accordance with an individual scenario, a vehicle network achieving a high level of safety can be assembled. In addition, since the in-vehicle control apparatus 100 controls the in-vehicle network in accordance with the individual scenarios, the in-vehicle control apparatus 100 has less processing load than that of a common SDN controller.

Hereinafter, specific example embodiments will be described in more detail with reference to drawings. In the example embodiments, like components will be denoted by like reference characters, and description thereof will be omitted.

### [First Example Embodiment]

A first example embodiment will be described in more detail with reference to drawings.

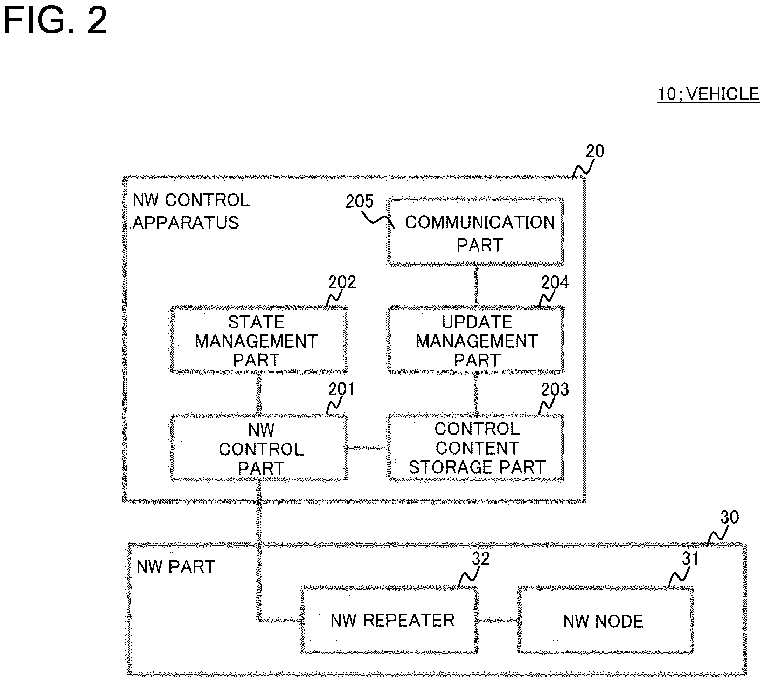

Fig. 2 is a diagram illustrating an example of an internal configuration of a vehicle 10 according to the first example embodiment. As illustrated in Fig. 2, the vehicle 10 includes a network (NW) control apparatus 20 and a network part 30.

The NW control apparatus 20 is an apparatus that controls an in-vehicle network based on the detection results (vehicle states) obtained by vehicle state detection means (for example, NW nodes 31, which will be described below). As illustrated in Fig. 2, the NW control apparatus 20 is mounted on the vehicle 10 and controls the NW part 30, which is the in-vehicle network.

The NW control apparatus 20 includes an NW control part 201, a state management part 202, a control content storage part 203, an update management part 204, and a communication part 205.

The NW part 30 includes the NW nodes 31 that communicate with each other and NW repeaters 32 that relay communications. That is, an in-vehicle network including the plurality of NW repeaters 32 is assembled inside the vehicle 10.

While Fig. 2 illustrates one NW node 31 and one NW repeater 32, in practice, the vehicle 10 includes a plurality of NW nodes 31 and a plurality of NW repeaters 32. The configuration of the NW part 30 in Fig. 2 is an example, the number of NW repeaters 32 and the number of NW nodes 31 connected thereto may vary depending on the vehicle. For example, n (n is any positive integer) NW nodes 31 and n NW repeaters 32 are included in the vehicle 10. In this case, in the following description, the NW nodes 31 and the NW repeaters 32 will be denoted as NW nodes 31-1 to 31-n and NW repeaters 32-1 to 32-n, respectively. For example, a ring topology may be adopted as the connection mode of the plurality of NW repeaters 32, and a star topology in which a plurality of NW nodes 31 are connected to a single NW repeater 32 may be adopted.

When a packet (data) is transmitted from an NW node 31 to a different NW node 31, an NW repeater 32 forwards this packet so that this packet will arrive at the target NW node 31 (the different NW node 31).

Examples of the individual NW node 31 include a vehicle-mounted camera, a proximity sensor, a brake operation quantity sensor, a steering wheel operation quantity sensor, a vehicle-mounted monitor, a collision warning device, a self-driving assisting module, and an engine control ECU (Electronic Control Unit).

The individual NW repeater 32 is, for example, a device that performs communications (packet forwarding) based on Ethernet (registered trademark, the same applies hereinafter) standards. In addition to the packet forwarding function, the individual NW repeater 32 sets/controls disconnection, duplication, bandwidth limitation, and priority level on packet communications inputted thereto and rewriting of packet information, for example. The control on the rewriting of the packet information includes changing source/destination MAC (Media Access Control) addresses, IP (Internet Protocol) addresses, and TCP/UDP (Transmission Control Protocol/User Datagram Protocol) ports and adding and removing VLAN (Virtual Local Area Network) tags, for example.

For example, the NW control part 201 in the NW control apparatus 20 performs FlowMod on FlowTable in accordance with OpenFlow standards to set NW control contents in the NW repeaters 32. By setting FlowTable in an individual NW repeater 32, the NW control part 201 controls the operation of the individual NW repeater 32.

As described above, the NW control apparatus 20 and the NW repeaters 32 may be configured as an OpenFlow controller and OpenFlow switches, respectively, based on the OpenFlow standards. However, the communication standards between the NW control apparatus 20 and the NW repeaters 32 are not limited to the OpenFlow standards.

The state management part 202 is means for monitoring (detecting) presence or absence of various states of the vehicle 10 on which the NW control apparatus 20 is mounted. Examples of the "states" monitored by the state management part 202 include the engine state (inactive, active), the speed state (a low speed, a medium speed, a high speed), the lamp lighting state based on an operation on a direction indicator (a left-turn lamp is on, a right-turn lamp is on, no lamp is on), and the driving state (manual driving, self-driving). Other examples of the above states include determination of a dangerous state based on a collision avoidance sensor, the general road running state/highway running state based on navigation, and the OTA state. That is, the vehicle states represent matters or events that occur due to vehicle-specific actions or operations.

The state management part 202 may directly acquire sensor values from various sensors, which are the vehicle state detection means, and determine the vehicle states. Alternatively, the state management part 202 may acquire data (packets) flowing through the NW part 30 and determine the vehicle states. For example, the state management part 202 acquires the engine state (active, inactive) from the engine control ECU, for example, and uses the engine state to determine the vehicle states.

The NW control part 201 acquires the current vehicle states via the state management part 202. The NW control part 201 refers to an NW control scenario based on the acquired current vehicle states and controls the network in the vehicle 10 in accordance with the corresponding scenario (changes the settings of the NW repeaters 32).

The NW control part 201 sets, on the plurality of NW repeaters 32 in the NW part 30 connected to the NW control part 201, forwarding, disconnection, duplication, bandwidth limitation, priority levels, etc. of communications from the NW nodes 31. That is, the NW control part 201 controls the NW part 30 so that the NW repeaters 32 will perform, for example, a packet forwarding path control operation, a bandwidth control operation, and a priority level control operation.

The control content storage part 203 holds an NW control scenario table and an NW control content table.

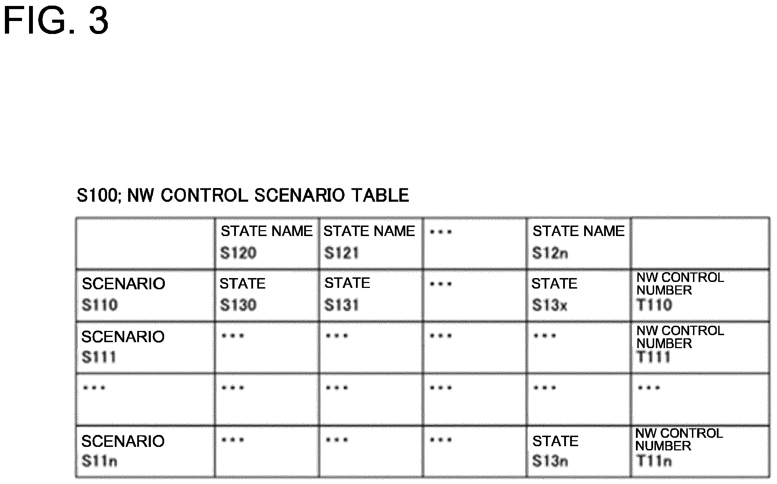

The NW control scenario table is information (table information) in which combinations of states of the vehicle 10 and control operations of the NW repeaters 32 corresponding to the combinations are associated with each other (see Fig. 3). The control operations are indicated as NW control numbers.

Since there are a plurality of combinations of states of the vehicle 10, there are a plurality of NW control scenarios. For example, various combinations of the engine state, the running state, etc. are comprehensively covered, and a scenario (NW control scenario) is assigned to each combination. In addition, a NW control number is assigned to each scenario.

As described above, since the in-vehicle network is controlled differently depending on the vehicle states, the control content storage part 203 manages and holds a different NW control method per state set, as the NW control scenario table. As illustrated in Fig. 3, as described above, an NW control scenario table S100 is managed in the control content storage part 203. In Fig. 3, the names of the states of the vehicle 10 (for example, the activation state of the engine, etc.) are managed as state names S120 to S12n. In addition, specific contents of the states of the vehicle 10 (for example, the engine is active or inactive) are managed as states S130 to S13x, for example.

By referring to the NW control scenario table S100 as illustrated in Fig. 3, the NW control part 201 determines the in-vehicle network control operation corresponding to a scenario by using an NW control number. For example, in Fig. 3, when a combination of states that matches a scenario S110 is determined, the control operation performed by the NW control part 201 is determined to be the control operation matching an NW control number T110.

There are a plurality of combinations of states, and these combinations are managed as scenarios S110 to S11n. In addition, an NW control number T11z (z is any number) may be specified for different scenarios Sllx and Slly (x and y are any numbers).

The in-vehicle network control operation corresponding to an NW control scenario may be realized by setting a different NW control content (control information) on each of the plurality of NW repeaters 32. For example, the contents that are set in the plurality of NW repeaters 32 when the network control operation (the NW control number T110) corresponding to the scenario S110 illustrated in Fig. 3 is realized are different from those that are set in the plurality of NW repeaters 32 when an NW control number T111 is realized.

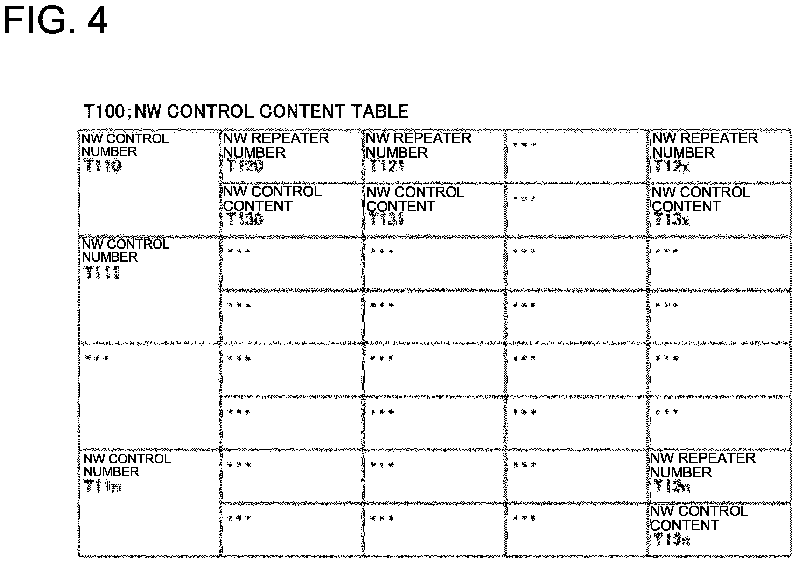

Thus, the control content storage part 203 manages an individual in-vehicle network control operation (an individual NW control number) and the NW control contents (control information) that are set in the NW repeaters 32 when this NW control number is determined in association with each other. The table used for this management is the NW control content table (see Fig. 4).

As illustrated in Fig. 4, in the NW control content table, an individual NW control number and the NW control contents that are set in the NW repeater 32 when this NW control number is determined are managed in association with each other. In Fig. 4, NW repeater numbers are used to determine (identify) the NW repeaters 32. As described above, the NW control content table is a table for managing and holding, as numbers, the NW control contents (the control information that is set in the NW repeaters 32) that need to be referred to when certain vehicle states are determined.

As described above, the NW control content table T100 illustrated in Fig. 4 is table information managed by the control content storage part 203. In the NW control content table T100, all control operations performed on the NW repeaters 32 in the certain states are written as NW control contents. These NW control contents are written per NW control number.

For example, in the case of the NW control number T110, the NW control contents T130 to T13x, which are set in the NW repeaters 32 corresponding to the NW repeater numbers T120 to T12x, are written. For example, the NW repeater 32, on which a control content corresponding to the NW control content T130 needs to be set, is specified (determined) as the NW repeater number T120.

In Fig. 4, the number of combinations of NW repeater numbers and NW control contents in a certain state set is n, which is the number of NW repeaters 32 (T110 to T11n, T120 to T12n). An individual combination of NW repeater numbers T120 to T12x and NW control contents T130 to T13x in a certain state set is managed by using an NW control number, for example. A plurality of combinations are managed by using the NW control numbers, and in Fig. 4, these combinations are managed by using the NW control numbers T110 to T11n.

As described above, an individual control scenario, in which vehicle states and control contents that are set in the plurality of NW repeaters 32 are associated with each other, is managed by using the NW control scenario table and the NW control content table.

Referring back to Fig. 2, the update management part 204 is means for managing writing the NW control scenario table and the NW control content table in the control content storage part 203 from the outside of the NW control apparatus 20.

The update management part 204 not only manages new writing on the NW control scenario table and the NW control content table but also manages write permission and updating of the contents of these tables, for example. Functions of the update management part 204 are constituted by an OTA software update technique or the like. If updating of contents can be managed, the updating may be realized by a function other than OTA.

The communication part 205 is means for communicating with apparatuses outside the vehicle. Any method may be adopted as the communication means. Examples of the communication means include Ethernet, a wireless LAN (Local Area Network), and a carrier communication, and OBDII (On-Board Diagnostics second generation).

### [Description of Operation]

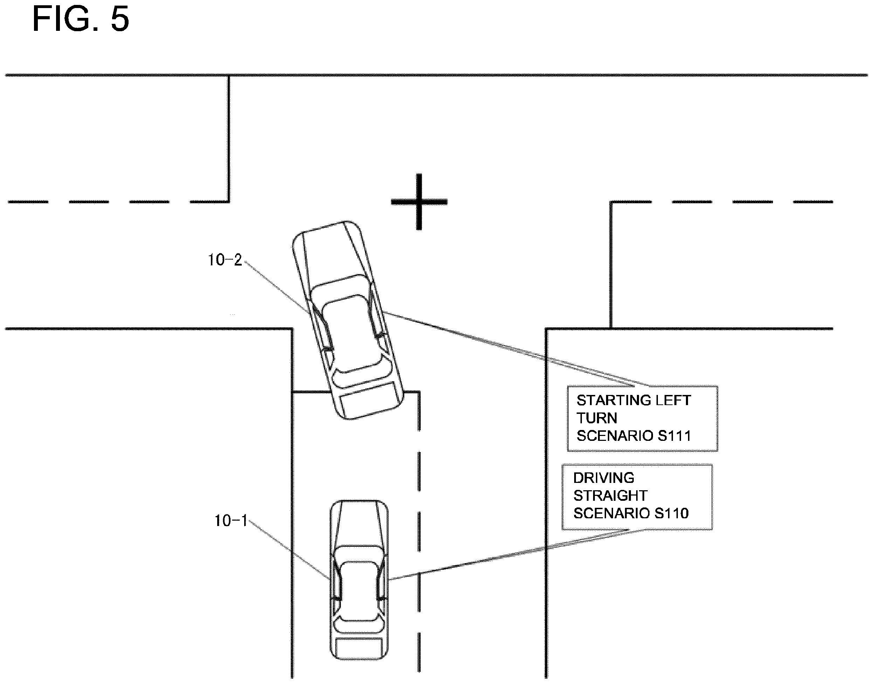

Next, an operation of the vehicle 10 according to the first example embodiment will be described with reference to drawings. The following description assumes an in-vehicle network control operation performed when the vehicle 10 is driving straight and an in-vehicle network control operation performed when the vehicle 10 is making a left turn, as illustrated in Fig. 5. That is, the following description will be made on change of the in-vehicle network that occurs when the vehicle 10 that is driving straight starts to turn left.

While Fig. 5 illustrates two vehicles 10-1 and 10-2 for convenience, these vehicles are the same vehicle 10. The control content storage part 203 of the vehicle 10-1 and the vehicle 10-2 stores therein the NW control scenario table S100 and the NW control content table T100 having the same contents.

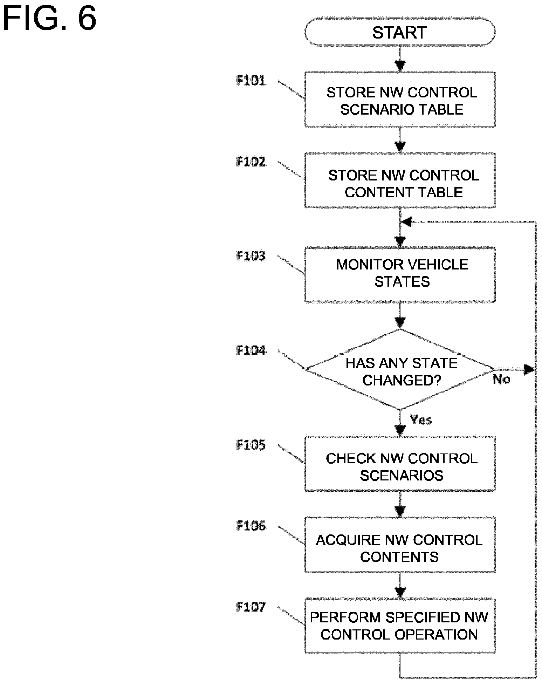

For example, the vehicle 10 acquires the NW control scenario table and the NW control content table from an external apparatus, and the control content storage part 203 holds these items of information (steps F101 and F102 in Fig. 6).

As described above, the vehicle 10-1 is driving straight, and the vehicle 10-2 is starting a left turn.

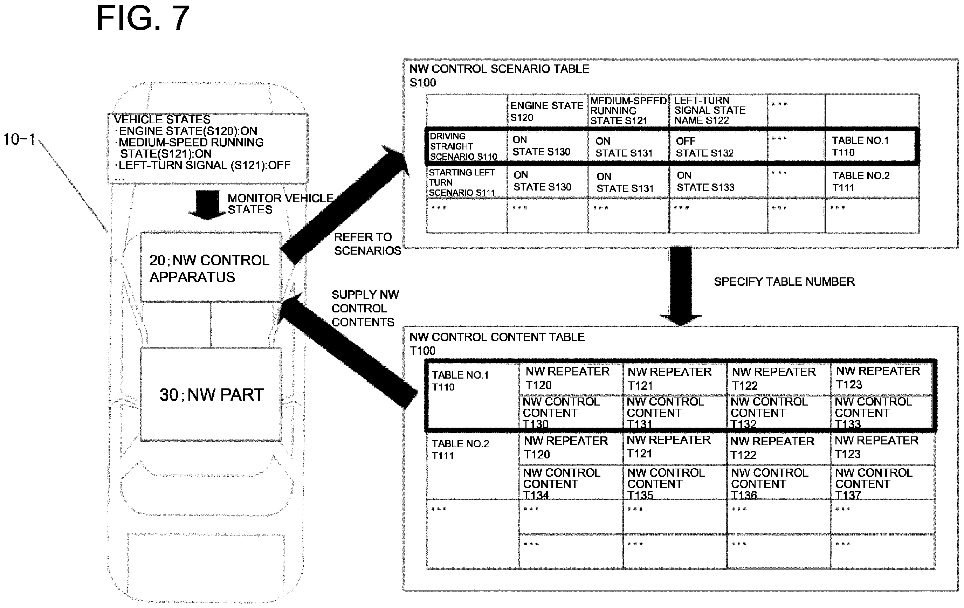

First, an NW control operation performed when the vehicle 10-1 is driving straight will be described with reference to Fig. 7. Fig. 7 illustrates examples of the NW control scenario table S100 and the NW control content table T100.

By using a function of the state management part 202, the NW control apparatus 20 monitors the vehicle states (S120 to S12n) such as the engine state, the medium-speed running state, and the operation state of the left-turn indicator (step F103 in Fig. 6).

If there is a change in the contents of the vehicle states (S120 to S12n) (for example, if a light is switched from ON to OFF), the state management part 202 notifies the NW control part 201 of the contents (statuses) of the states (S120 to S12n) (Yes branch in step F104 in Fig. 6).

If there is no change, the state management part 202 continues to monitor the vehicle states (No branch in step F104 in Fig. 6). Based on the contents (statuses) of the reported states (S120 to S12n), the NW control part 201 queries the control content storage part 203 about the current scenario.

The control content storage part 203 refers to the NW control scenario table S100 stored and managed therein and searches for a scenario S11x that matches the contents (a combination of the contents of the states) for which checking is requested by the NW control part 201 (step F105 in Fig. 6). In the case of Fig. 7, the scenario S110 corresponding to driving straight is obtained as the search result.

Next, by using the NW control number (table No.1 = T110) specified by the scenario S110 corresponding to driving straight, the control content storage part 203 determines NW control contents T130 to T133 set in the NW repeaters 32 (repeater numbers T120 to T123) from the NW control content table T100.

In step F106 in Fig. 6, the control content storage part 203 notifies the NW control part 201 of the determined NW control contents T130 to T133 (the NW control part 201 acquires the NW control contents T130 to T133).

The NW control part 201 sets the control contents of the NW control contents T130 to T133 in the NW repeaters 32 corresponding to the NW repeater numbers T120 to T123 (step F107).

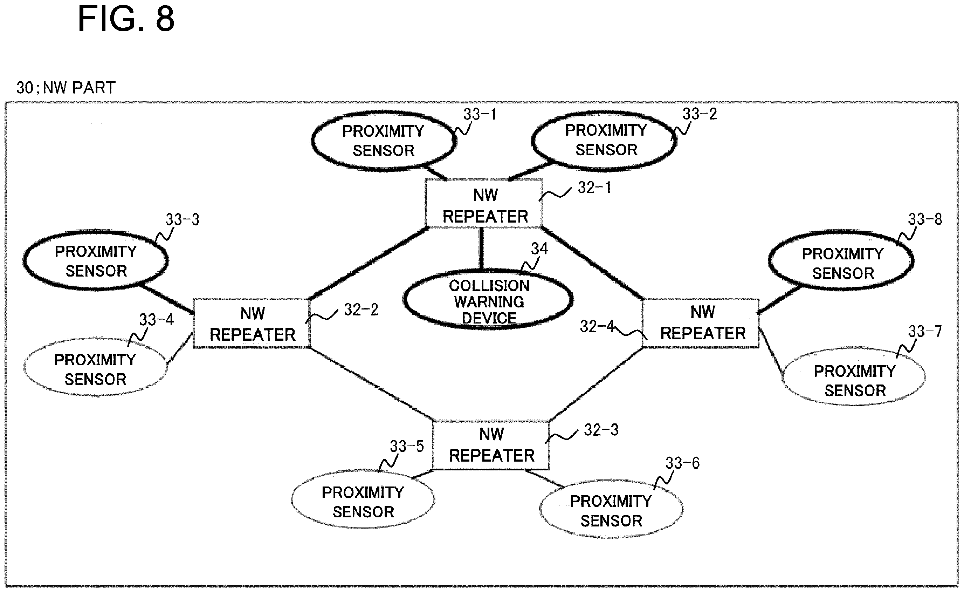

Fig. 8 is a diagram illustrating an example of the state of the NW part 30 in the vehicle 10-1 on which the above in-vehicle network control operation has been performed. The NW part 30 illustrated in Fig. 8 indicates a network configuration example of a collision avoidance sensor system of the vehicle 10-1.

As illustrated in Fig. 8, a proximity sensor 33-1 and a proximity sensor 33-2 monitor the front side of the vehicle. A proximity sensor 33-3 and a proximity sensor 33-4 monitor the left side of the vehicle. A proximity sensor 33-5 and a proximity sensor 33-6 monitor the rear side of the vehicle. A proximity sensor 33-7 and a proximity sensor 33-8 monitor the right side of the vehicle. The individual proximity sensors 33 transmit their respective monitoring data to a collision warning device 34.

The collision warning device 34 analyzes the monitoring data. When an object comes within a certain distance from the vehicle 10, the collision warning device 34 outputs a warning. In Fig. 8, the four NW repeaters 32-1 to 32-4 are connected to each other in a ring structure, and all the NW repeaters 32 are connected to the NW control apparatus 20.

While driving straight, the vehicle 10-1 gives a priority to avoidance of a head-on collision. Thus, the NW control part 201 controls the individual NW repeaters 32 so that the data from the proximity sensor 33-1 and the proximity sensor 33-2 monitoring the front side of the vehicle and the proximity sensor 33-3 and the proximity sensor 33-8 will preferentially reach the collision warning device 34.

As illustrated in Fig. 7, the NW control content T130, the NW control content T131, the NW control content T132, and the NW control content T133 are registered in the NW control content table T100 as the control contents to avoid a head-on collision (as the control information set in the individual NW repeaters 32).

The NW control part 201 acquires the above four NW control contents from the NW control content table T100 and controls the NW part 30 based on the acquired NW control contents. For example, the NW control part 201 controls the NW repeater 32 (sets the control information) so that the data from the above four proximity sensors 33 will reach the collision warning device 34 preferentially to the data from the other sensors. More specifically, the NW control part 201 sets a packet handling rule, which maximizes the IP (Internet Protocol) precedence value in the ToS field written in a packet header of an individual packet transmitted from the above four proximity sensors 33, in the individual NW repeaters 32.

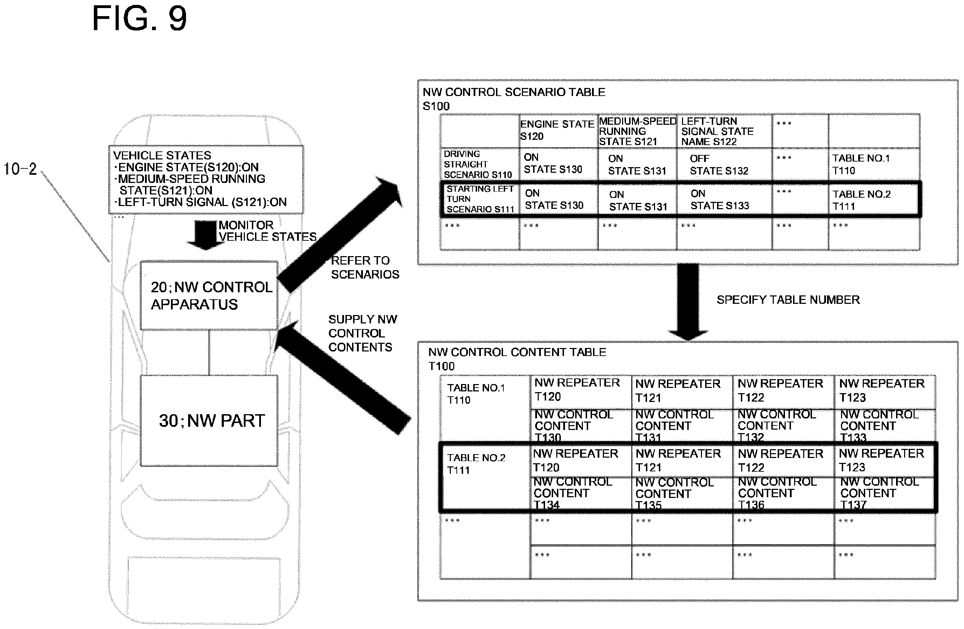

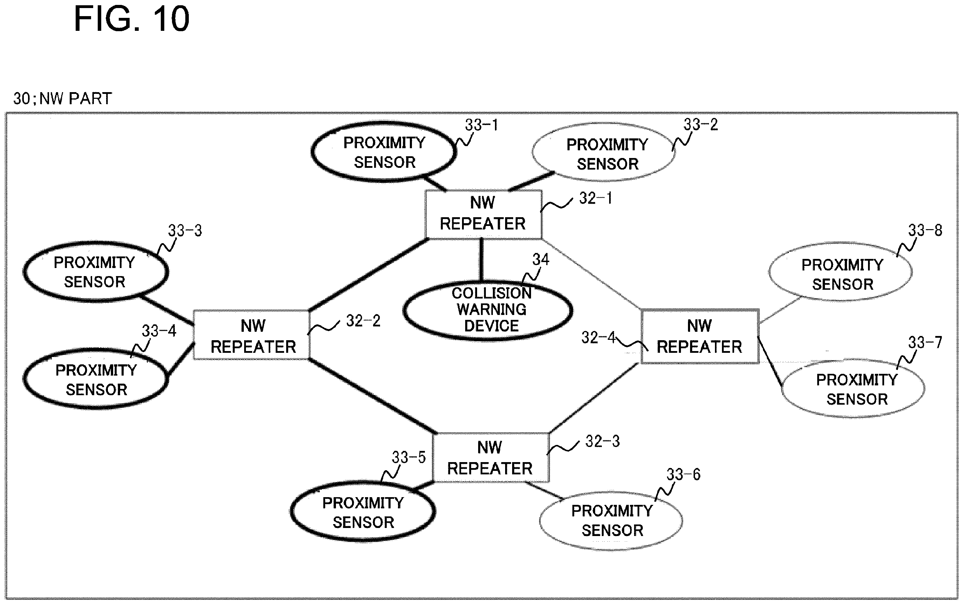

Next, a vehicle network control operation performed when the vehicle 10 starts a left turn will be described with reference to Figs. 9 and 10. Since the network control procedure in this case is the same as that described with reference to the above Fig. 6, detailed description thereof will be omitted.

Fig. 9 illustrates examples of the NW control scenario table S100 and the NW control table T100. As illustrated in Fig. 9, if the NW control apparatus 20 determines that the vehicle 10 starts to make a left turn, the NW control apparatus 20 determines the scenario S111 corresponding to this state and controls the individual NW repeaters 32 in accordance with the determined scenario. Fig. 10 is a diagram illustrating an example of the state of the NW part 30 in the vehicle 10-2 on which an in-vehicle network control operation has been performed.

Since the vehicle 10-2 gives a priority to avoidance of a collision on the left side of the vehicle at the start of a left turn, the NW control part 201 controls the individual NW repeaters 32 so that the data from the proximity sensor 33-1 monitoring the front side of the vehicle, the proximity sensor 33-3, the proximity sensor 33-4, and the proximity sensor 33-5 will preferentially reach the collision warning device 34.

As illustrated in Fig. 9, an NW control content T134, an NW control content T135, an NW control content T136, and an NW control content T137 for avoidance of a collision on the left side of the vehicle are written in the NW control content table T100. The NW control part 201 controls the NW part 30 (the NW repeaters 32) by using the above four NW control contents.

### [Description of Effects]

As described above, the vehicle 10 according to the first example embodiment includes the NW control apparatus 20 connected to the vehicle state detection means. In addition, in the vehicle 10, a plurality of combinations of prepared vehicle states are defined as scenarios, and the NW control contents used in these scenarios are prepared. In addition, when any one of the vehicle states is changed and when the resultant vehicle states match any one of the scenarios prepared in the vehicle 10, the NW control contents determined by this scenario are set in the NW repeaters 32 constituting the in-vehicle network. As a result, the in-vehicle network can be changed in accordance with a change in the vehicle states. That is, when a state of the vehicle 10 is changed, since the NW control apparatus 20 mounted in the vehicle 10 refers to the control scenarios and controls the in-vehicle network (the plurality of NW repeaters 32), a flexible network control operation can be realized.

In addition, according to the first example embodiment, the NW control scenarios and the NW control contents are prepared, and by referring to the scenarios and the NW control contents, the vehicle 10 controls its in-vehicle network. In this way, even when the network is changed, path calculation does not need to be performed. As a result, while operated, the vehicle 10 undergoes less control processing load needed for change of the network when a vehicle state is changed.

In addition, the vehicle 10 includes the communication part 205 and the control content storage part 203, and the scenarios and the NW control contents stored in the control content storage part 203 can be changed from the outside of the vehicle. As a result, the scenarios and the NW control contents can be rewritten entirely or partially while the vehicle 10 is being operated after the scenarios and the NW control contents are set.

In addition, since the same scenarios and the same NW control contents can be used for the same kind of vehicles (vehicles 10 having the same network configuration including the NW part 30), the same scenarios and the same NW control contents can be applied to many vehicles 10.

### [Second Example Embodiment]

Next, a second example embodiment will be described in detail with reference to drawings.

A second example embodiment includes an NW design apparatus 40 installed outside a vehicle 10. The NW design apparatus 40 is configured to be connectable to an NW control apparatus 20. The NW design apparatus 40 is an apparatus that generates an NW control scenario table S100 and an NW control content table T100. That is, the NW design apparatus 40 is an apparatus that generates control scenarios. The vehicle 10 controls its in-vehicle network by using the NW control scenario table S100 and the NW control content table T100 generated by the NW design apparatus 40.

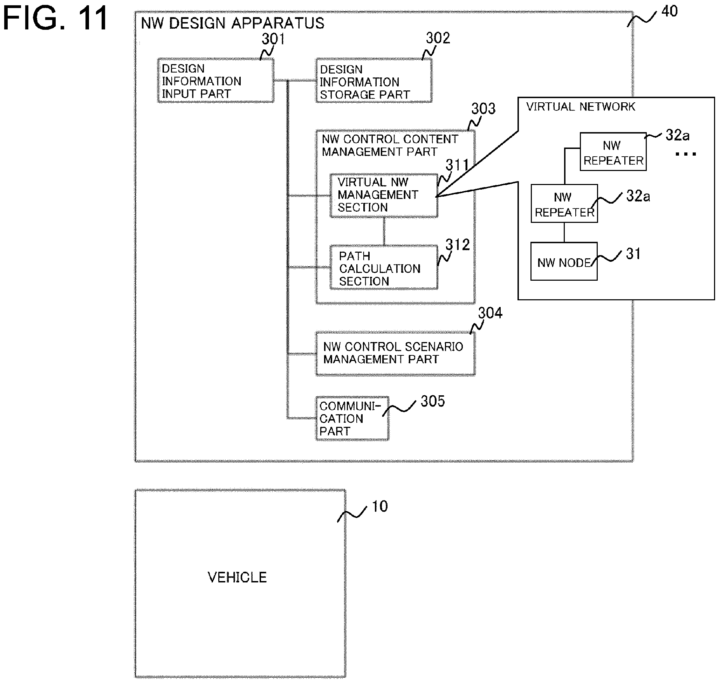

Fig. 11 is a diagram illustrating an example of an internal configuration (a processing configuration) of the NW design apparatus 40 according to the second example embodiment. As illustrated in Fig. 11, the NW design apparatus 40 includes a design information reception part 301, a design information storage part 302, an NW control content management part 303, an NW control scenario management part 304, and a communication part 305.

The design information reception part 301 receives physical network information, logical network information, NW control scenario generation information that constitute an NW part 30 in the vehicle 10 from the outside (an NW designer, for example).

The physical network information is information about network-related performance and communication requirements such as about the components (kinds of NW nodes 31), the topology information, the MAC (Media Access Control) addresses, and the upper limit bandwidth quantity. The logical network information is information about the flow, the communication period, the required bandwidth quantity, the path redundancy requirements, the priority levels, etc. The NW control scenario generation information includes state names, combinations of states, and NW control numbers, etc.

The NW control content management part 303 includes a virtual network (virtual NW) management section 311 and a path calculation section 312.

The virtual NW management section 311 uses the physical network information to internally generate a virtual network of the NW part 30 in the vehicle 10. That is, the virtual NW management section 311 virtually constitutes a network that emulates the configuration and operation of the NW part 30 in the vehicle 10. The virtual network generated by the virtual NW management section 311 is a network that simulates the internal network (the in-vehicle network) of the vehicle 10 to be designed.

The virtual NW management section 311 sets the logical network information in the above generated virtual network. By setting the logical network information, communications performed in the actual vehicle 10 are simulated in the virtual network (communications are performed in accordance with communication requests from the NW nodes 31, etc.).

When an NW repeater 32a simulated in the virtual network receives a communication packet, an individual NW repeater 32a queries the path calculation section 312 about the control content of the communication packet.

The logical network information is generated on a per-flow basis, and there are cases where a plurality of items of logical network information exist for a single item of physical network information. In addition, the virtual NW management section 311 can automatically generate path disconnection patterns from a topology established based on certain physical network information, for all path combinations.

Based on the content of the query from the individual NW repeater 32a in the virtual network, the path calculation section 312 performs path calculation by using its internal path calculation algorithm. The calculation result is set in the individual NW repeater 32a as a communication packet control content (packet forwarding, packet removal, packet rewriting, Queue specification rule, etc.). All control contents for all communication packets of the individual NW repeaters 32a are generated as the NW control contents. In this way, the NW control content management part 303 generates control scenarios for controlling the NW repeaters 32a by using the virtual network.

For example, functions of the path calculation section 312 can be realized by using path calculation functions of an OpenFlow controller. More specifically, the path calculation section 312 refers to policies, etc. used when path calculation is performed, calculates packet forwarding paths among the NW nodes 31, and calculates packet handling rules (control contents) that are set in the individual NW repeaters 32a.

The NW control content management part 303 adds an NW control number to an NW control content generated each time the physical network information and the logical network information are changed and formulates the resultant information as the NW control content table T100.

The NW control scenario management part 304 generates a scenario by specifying inputted state names (state kinds), a combination of states, and an NW control number and formulates the scenario as the NW control scenario table S100.

The communication part 305 has a function of communicating with nodes outside the NW design apparatus 40. The communication by the communication means is not limited to any particular communication. Examples of the communication include Ethernet, a wireless LAN, a carrier communication, and OBDII.

Next, an operation according to the second example embodiment will be described.

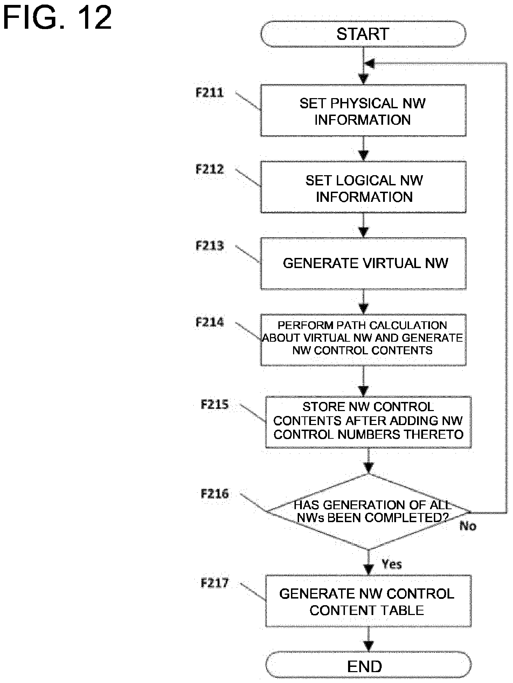

Fig. 12 is a flowchart illustrating an example of an operation of the NW design apparatus 40 according to the second example embodiment.

First, the NW control content management part 303 generates the NW control content table T100.

Next, the design information reception part 301 sets the physical network information and the logical network information about the NW part 30 in the vehicle 10 in the design information storage part 302 (steps F211 and F212 in Fig. 12).

The virtual NW management section 311 extracts the physical network information and the logical network information from the design information storage part 302 and generates a virtual network about the NW part 30 (step F213 in Fig. 12).

Communications are performed in the virtual network, and in response to queries about communication packet control contents from the virtual NW management section 311, the path calculation section 312 performs path calculation. The result of the path calculation is set in the virtual NW management section 311.

Upon completion of the settings on all the communication packets, NW control contents are generated (step F214 in Fig. 12).

An NW control number is added to an individual one of the NW control contents generated, and the NW control contents are stored in the design information storage part 302 (step F215 in Fig. 12).

The virtual NW management section 311 completes the generation of all the patterns of NW control contents used in the NW part 30 and the addition of the NW control numbers while changing the physical network information and the logical network information (Yes branch in step F216 in Fig. 12).

The NW control content management part 303 formulates all the generated combinations of NW control contents and NW control numbers as the NW control content table T100 and stores the NW control content table T100 in the design information storage part 302 (step F217 in Fig. 12).

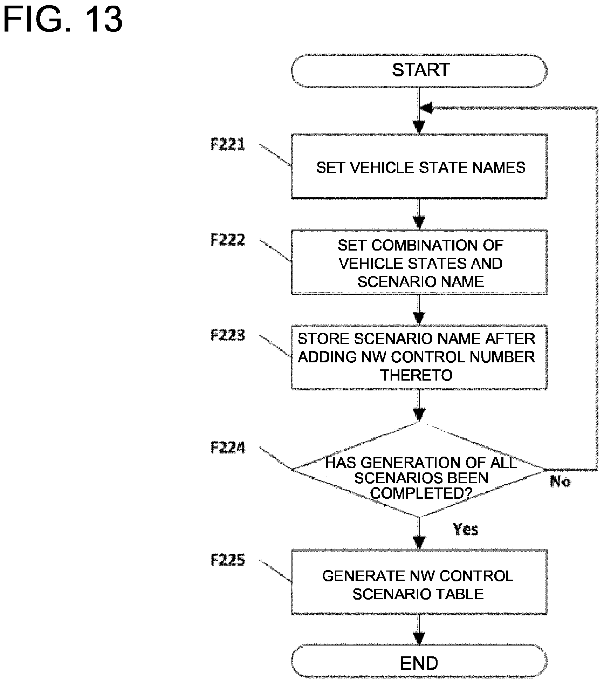

Fig. 13 is a flowchart illustrating an example of an operation of the NW design apparatus 40 according to the second example embodiment.

The NW control scenario management part 304 generates the NW control scenario table S100.

The NW control scenario management part 304 sets vehicle state names based on information from the design information reception part 301 (step F221 in Fig. 13).

The NW control scenario management part 304 specifies a combination of contents of vehicle state names (for example, ON/OFF of a light, etc.) and sets a scenario (step F222 in Fig. 13).

The NW control scenario management part 304 reads an NW control number from the design information storage part 302 and specifies an NW control number used for the scenario (step F223 in Fig. 13).

The NW control scenario management part 304 repeats the above steps as many times as the number of scenarios that are performed on the vehicle 10 (Yes in step F224 in Fig. 13). Next, the NW control scenario management part 304 formulates the generated scenarios as the NW control scenario table S100 and stores the NW control scenario table S100 in the design information storage part 302 (Fig. step F225).

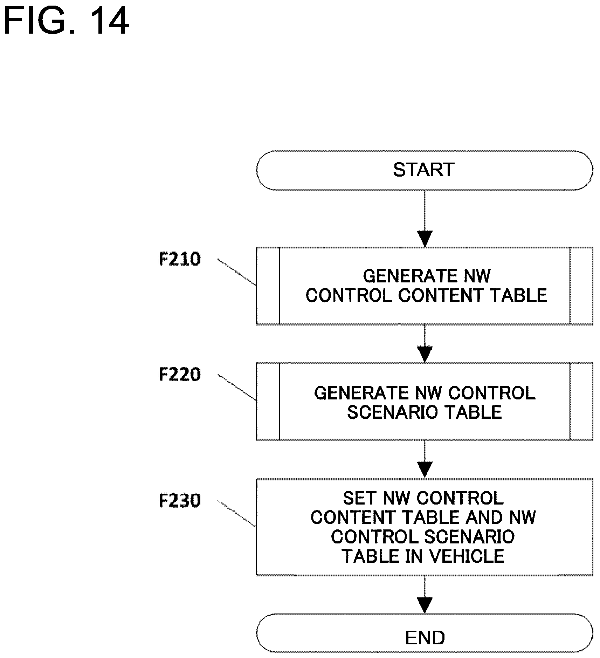

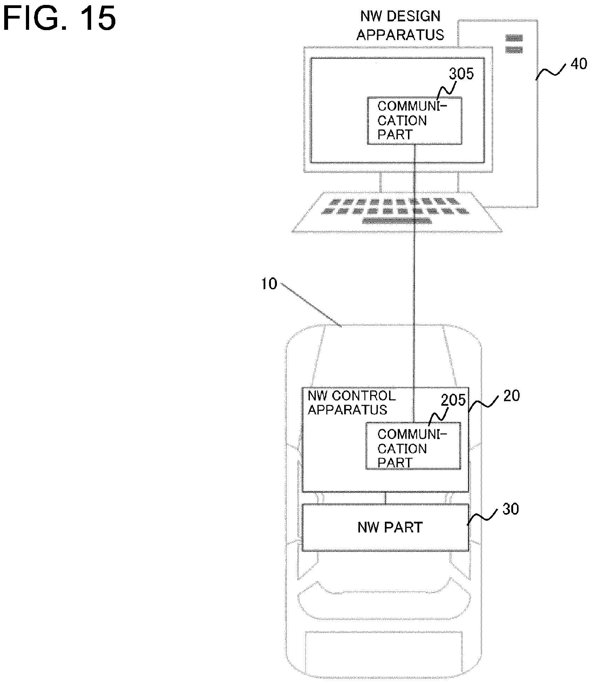

As described above, according to the second example embodiment, the NW design apparatus 40 generates the NW control scenario table and the NW control content table (steps F210 and F220 in Fig. 14). As illustrated in Fig. 15, the NW design apparatus 40 sets the NW control scenario table S100 and the NW control content table T100 in the NW control apparatus 20 in the vehicle 10 before the start of the operation via a communication part 205 and the communication part 305 (step F230 in Fig. 14).

The NW design apparatus 40 and the vehicle 10 illustrated in Fig. 15 may be connected to each other on a one-on-one basis. Alternatively, the NW design apparatus 40 may be connected to a plurality of vehicles 10 on a one-to-many basis, in which case, each vehicle 10 has the same configuration, and the NW control scenario table S100 and the NW control content table T100 duplicated by the NW design apparatus 40 can be set in each vehicle 10.

### [Description of Effects]

As described above, according to the second example embodiment, the NW design apparatus 40, which is network design means, is used outside the vehicle 10. This network design means receives network configuration information (a topology) about the vehicle 10 and generates a virtual network of the vehicle 10. In addition, the network design means generates NW control contents based on the generated virtual network. Next, a plurality of combinations of vehicle states are defined as scenarios, and the individual scenarios can be associated with NW control contents. By performing this association when the network of the vehicle 10 is designed, the network design of the vehicle can be performed before the vehicle 10 is operated.

In addition, the same contents of the logical network data (data about the virtual network), which is design asset data, may be used for different kinds of vehicles. Thus, logical NW data does not need to be designed again for these different kinds of vehicles. That is, since design asset data can be used when a network is designed for certain kinds of vehicles, the network design period can be shortened for different kinds of vehicles.

### [Third Example Embodiment]

Next, a third example embodiment will be described in detail with reference to drawings.

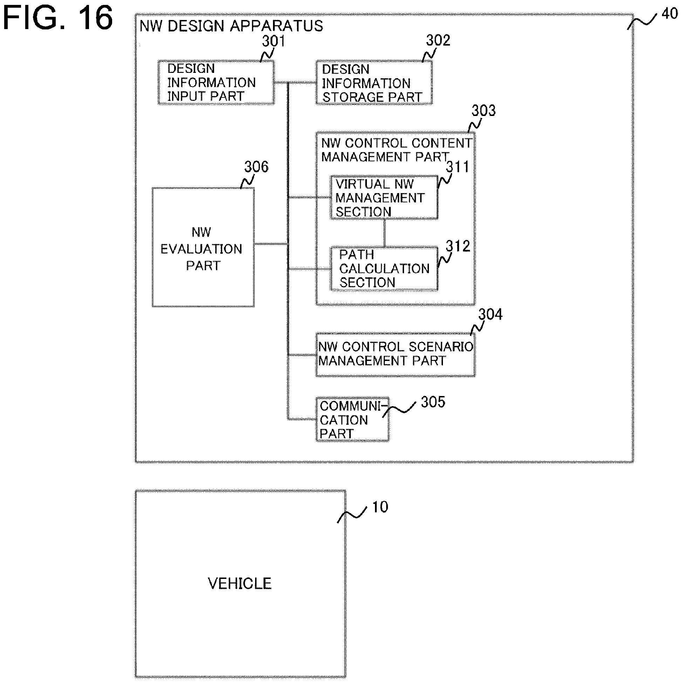

Fig. 16 is a diagram illustrating an example of an internal configuration (a processing configuration) of an NW design apparatus 40 according to a third example embodiment. As illustrated in Fig. 16, the NW design apparatus 40 according to the third example embodiment further includes an NW evaluation part 306. The NW design apparatus 40 uses this NW evaluation part 306 to evaluate an in-vehicle network assembled inside a vehicle 10. Specifically, the NW design apparatus 40 uses a virtual network described in the above second example embodiment to evaluate an in-vehicle network.

The NW evaluation part 306 performs evaluation (network evaluation) of an NW part 30 in the vehicle 10 by using a virtual network, an NW control scenario table S100, and an NW control content table T100. For example, in the evaluation of the network, communication characteristics (for example, the communication bandwidth, the communication delay, etc.) among NW nodes 31 are evaluated. More specifically, the NW evaluation part 306 performs threshold processing on the above communication characteristics and evaluates the network based on the result of the threshold processing. For example, if the communication delay is larger than a threshold, the evaluation result of the network is determined to be "poor".

The evaluation result is fed back to an NW designer. If the evaluation result is poor, the input information is changed, and the generation and evaluation is performed again. In addition, limited network evaluation may be performed by using a part of the NW control contents.

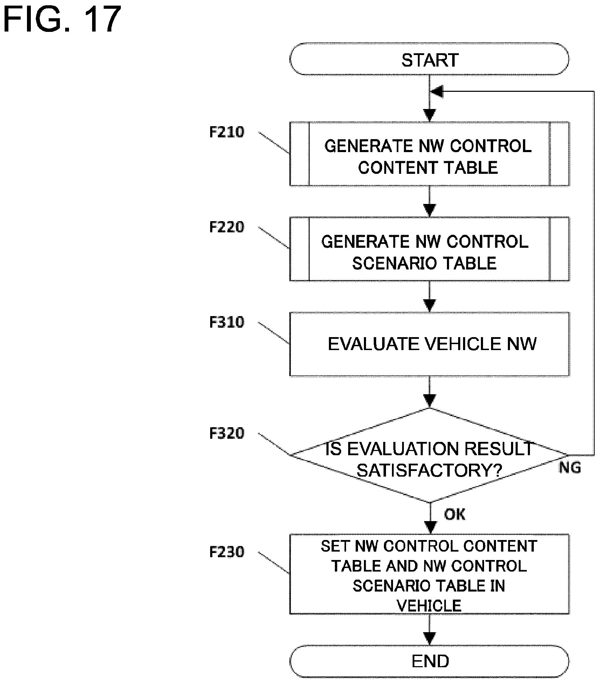

The above contents will be summarized as a flowchart in Fig. 17. Fig. 17 is a flowchart illustrating an example of an operation of the NW design apparatus 40 according to the third example embodiment.

As in the second example embodiment, the NW design apparatus 40 generates the NW control content table and the NW control scenario table (steps F210 and F220 in Fig. 17).

Next, the NW evaluation part 306 performs a simulation of network evaluation of the NW part 30 in the vehicle 10 by using the information constituting the virtual network, the NW control scenario table S100, and the NW control content table T100 acquired from a design information storage part 302 (step F310 in Fig. 17).

If the evaluation result is not satisfactory (if the evaluation result does not meet a criterion), the NW evaluation part 306 notifies the NW control content management part 303 to that effect. The NW control content management part 303 changes part of the physical network information or the logical network information and generates the NW control content table T100 again (NO branch in step F320 in Fig. 17).

If the evaluation result is satisfactory (YES branch in step F320 in Fig. 17), the NW control scenario table S100 and the NW control content table T100 are generated and set in the vehicle 10. The NW design apparatus 40 can be connected to the vehicle 10 on a one-to-one basis. Alternatively, the NW design apparatus 40 may be connected to a plurality of vehicles 10 on a one-to-many basis.

### [Description of Effects]

As described above, according to the third example embodiment, the scenarios, the NW control contents used with the scenarios, and the information constituting the NW in the vehicle 10 are recorded in the network design means, and a simulation (evaluation) about the network in the vehicle 10 is performed before the vehicle 10 is operated. By previously performing this simulation, evaluation of the network in each vehicle state set can be performed before the vehicle 10 is operated.

### [Fourth Example Embodiment]

Next, a fourth example embodiment will be described in detail with reference to drawings.

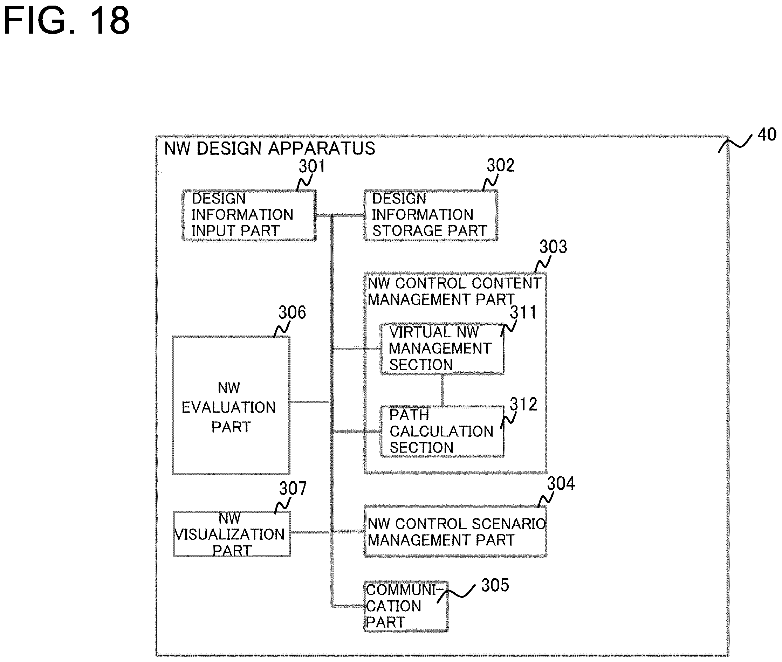

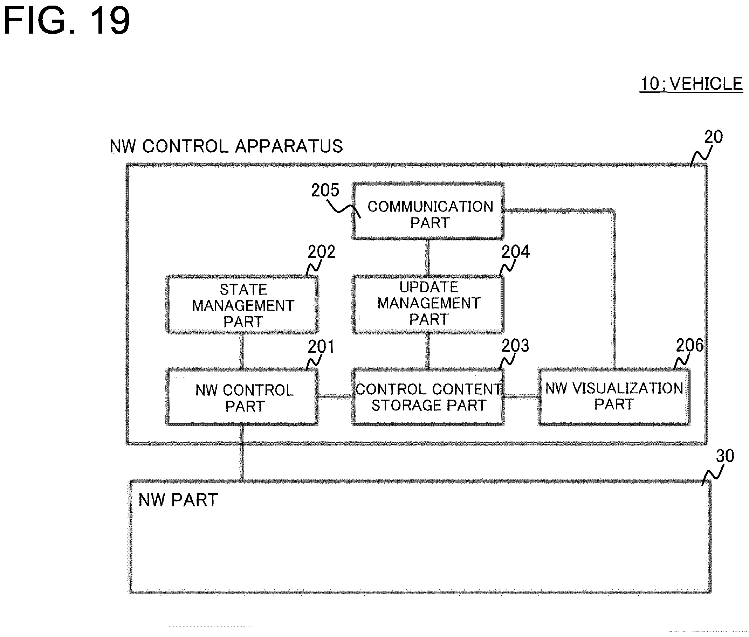

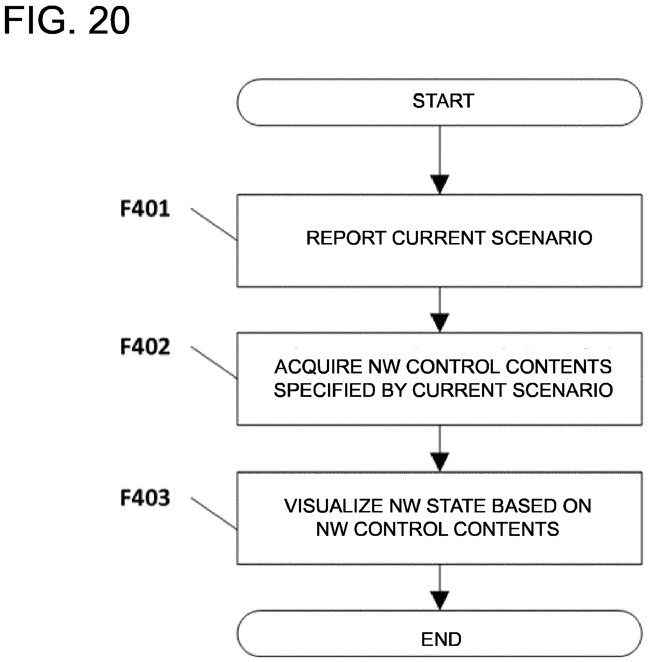

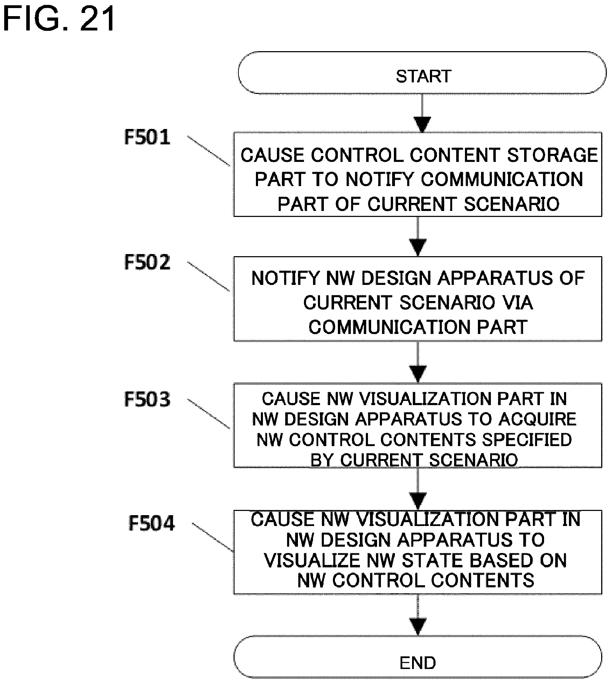

Fig. 18 is a diagram illustrating an example of an internal configuration of an NW design apparatus 40 according to a fourth example embodiment. Fig. 19 is a diagram illustrating an example of an internal configuration of an NW control apparatus 20 according to the fourth example embodiment. Fig. 20 is a flowchart illustrating an example of an operation of the NW control apparatus 20 according to the fourth example embodiment. Fig. 21 is a flowchart illustrating an example of an operation of the NW design apparatus 40 according to the fourth example embodiment.

As illustrated in Figs. 18 and 19, the NW design apparatus 40 includes an NW visualization part 307, and the NW control apparatus 20 includes an NW visualization part 206. According to the fourth example embodiment, the NW design apparatus 40 visualizes the status of the virtual network, and the NW control apparatus 20 visualizes the status of an in-vehicle network (an NW part 30).

A control content storage part 203 notifies the NW visualization part 206 in the NW control apparatus 20 of the scenario used by the current vehicle 10 and the NW control contents specified by this scenario (steps F401 and 402 in Fig. 20).

Based on the contents of which the NW visualization part 206 has been notified, the NW visualization part 206 visualizes the status of the current NW part 30 (the status of the in-vehicle network) (step F403 in Fig. 20). An image for the visualization may be prepared per scenario. For example, the NW visualization part 206 displays a screen displaying portions where links of the network are connected and portions where links of the network are disconnected in the whole network. Alternatively, the NW visualization part 206 may create a screen displaying the whole network and on which communication bandwidths of effective links are represented. In this case, the individual link may have a different thickness, depending on the value of its communication bandwidth.

The control content storage part 203 notifies the NW design apparatus 40 of the scenario used by the current vehicle 10 and the NW control contents specified by this scenario via a communication part 305 and a communication part 205 (steps F501 and 502 in Fig. 21).

The NW visualization part 307 acquires the control contents specified by the reported current scenario (step F503 in Fig. 21). The NW visualization part 307 visualizes the status of the current NW part 30 (the status of the virtualized in-vehicle network; the status of the virtual network) (step F504 in Fig. 21). An image for the visualization may be prepared per scenario.

In addition, the current network status may be visualized in either the vehicle 10 or the NW design apparatus 40. Alternatively, this visualization may be performed in both the vehicle 10 and the NW design apparatus 40. The NW design apparatus 40 may be connected to the vehicle 10 on a one-to-one basis. Alternatively, The NW design apparatus 40 may be connected to a plurality of vehicles 10 on a one-to-many basis.

### [Description of Effects]

According to the fourth example embodiment, an in-vehicle network is visualized as described above. Since the in-vehicle network has already been evaluated at the start of the operation of the vehicle, the network state corresponding to the state of this vehicle is determined in advance. As a result, by displaying the above network evaluation result of the vehicle 10 being operated, the network configuration of this vehicle in the current vehicle state can be visualized instantly.

### [Fifth Example Embodiment]

Next, a fifth example embodiment will be described in detail with reference to drawings.

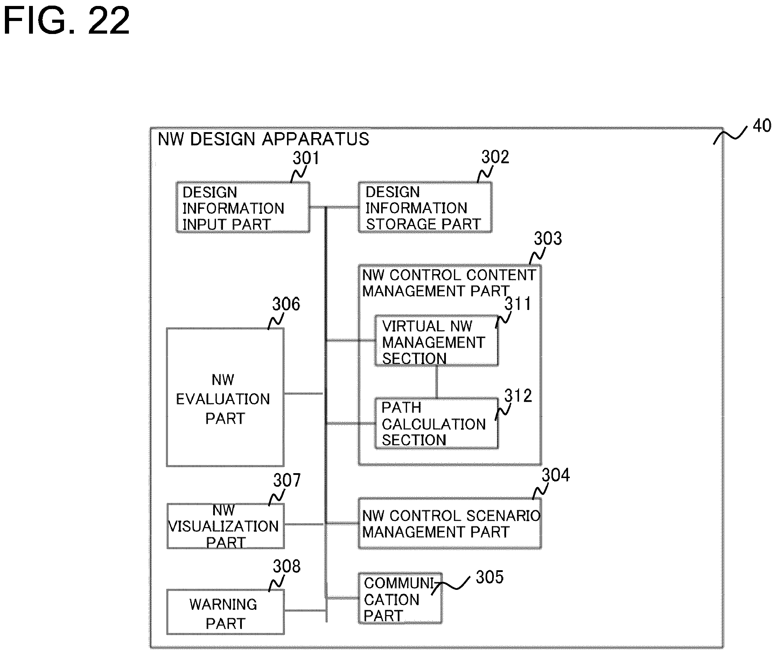

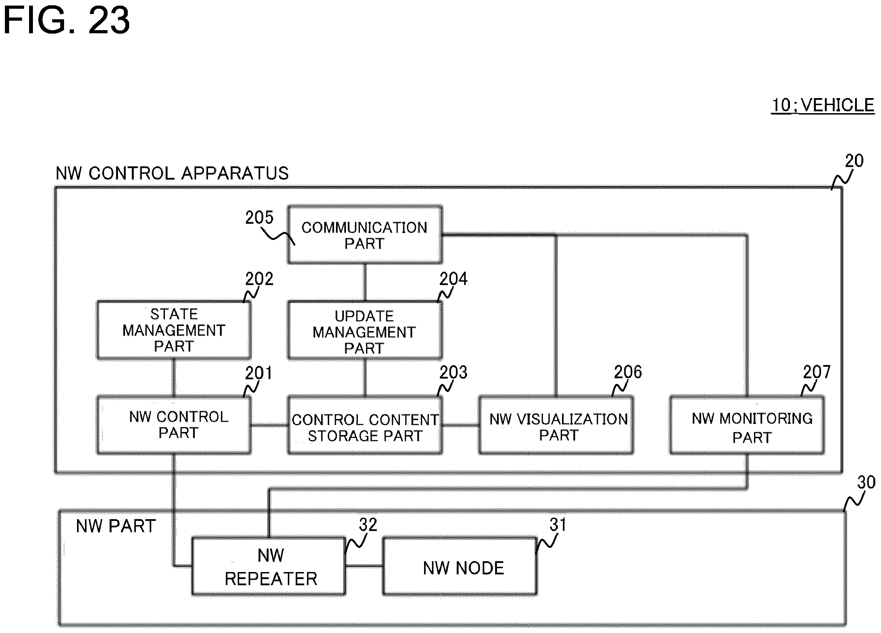

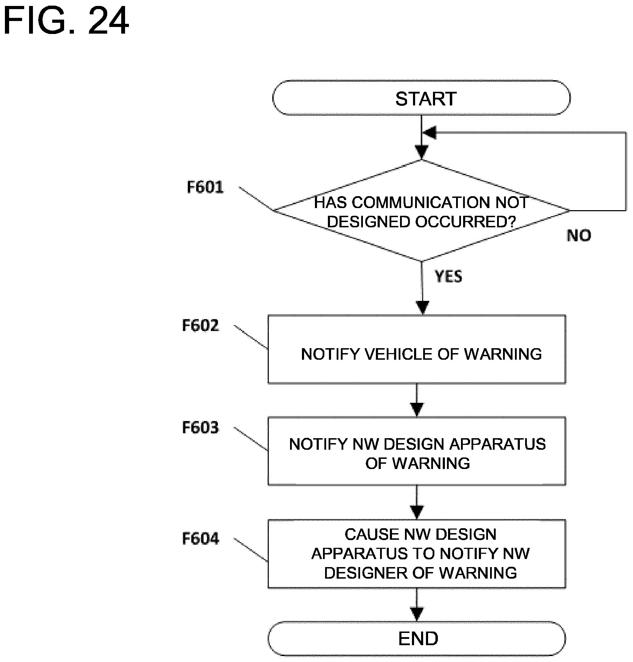

Fig. 22 is a diagram illustrating an example of an internal configuration of an NW design apparatus 40 according to a fifth example embodiment. Fig. 23 is a diagram illustrating an example of an internal configuration of an NW control apparatus 20 according to the fifth example embodiment. Fig. 24 is a flowchart illustrating an example of an operation of a system according to the fifth example embodiment.

The NW control apparatus 20 according to the fifth example embodiment further includes an NW monitoring part 207. In addition, the NW design apparatus 40 further includes a warning part 308.

As illustrated in Fig. 23, if an NW repeater 32 receives a communication packet, which is not written in the NW control content set therein, the NW repeater 32 notifies an NW control part 201 of the content of the communication packet (Yes branch in step F601 in Fig. 24). This notification can be realized by Packet-In of OpenFlow, for example.

The NW monitoring part 207 receives this notification and causes warning means in a vehicle 10 to notify (warn) a person in the vehicle 10 that a communication not designed in the vehicle 10 has occurred (step F602 in Fig. 24).

In addition, the NW monitoring part 207 notifies the NW design apparatus 40 of the above warning via a communication part 205 (step F603 in Fig. 24).

The warning part 308 of the NW design apparatus 40 notifies an NW designer of the same warning (step F604 in Fig. 24).

Examples of the above warning means include a warning sound, blinking of a lamp, and a message on a display.

An unknown communication could occur when an NW node 31 not designed in the design stage is added to an NW part 30, when an NW node 31 malfunctions, or when the NW part 30 is attacked from the outside thereof.

As described above, the NW monitoring part 207 monitors the presence or absence of a query about a setting of a control content from an individual NW repeater 32 constituting the in-vehicle network. If the warning part 308 in the NW design apparatus 40 is notified that there is a query about a setting of a control content from the NW control apparatus 20, the warning part 308 outputs a warning.

The NW design apparatus 40 may be connected to the vehicle 10 on a one-to-one basis. Alternatively, the NW design apparatus 40 may be connected to a plurality of vehicles 10 on a one-to-many basis. The warning may be performed in both the vehicle 10 and the NW design apparatus 40. Alternatively, the warning may be performed in either the vehicle 10 or the NW design apparatus 40. Alternatively, the vehicle 10 and the NW design apparatus 40 may not be connected to each other, and the warning may be performed in the vehicle 10 alone.

### [Description of Effects]

As described above, according to the fifth example embodiment, if a communication not designed by the designer occurs, the warning part 308 can output a report or a warning. If the designer is notified of the warning, the designer can design a new control content scenario, for example. In this way, a safer in-vehicle network can be prepared.

The following description summarizes the contents described in the above first to fifth example embodiments.

The NW control apparatus 20 is in-vehicle network control means including vehicle state detection means. There are prepared NW control contents per scenario determined by a combination of a plurality of vehicle states. In this way, even when a flow, a bandwidth, a priority level, or the like on an in-vehicle network changes with change of a vehicle state, a control operation is flexibly performed.

The NW design apparatus 40 is NW design means for generating a virtual network that simulates the in-vehicle network. By using the design means, it is possible to prepare NW control contents that match the flow, the bandwidth, the priority, etc. on the in-vehicle network in an individual vehicle state set before the operation of the vehicle is started (before the vehicle is sold).

By using the NW design apparatus 40, NW control contents can be set in the virtual network that simulates the in-vehicle network, and the network evaluation can be performed before the operation of the vehicle is started.

The NW control apparatus 20 and the NW design apparatus 40 can acquire the current vehicle states of the vehicle and visualize the network state of the current vehicle by referring to the vehicle states and the NW control contents corresponding thereto.

For a virtual network generated by the NW design apparatus 40 serving as NW design means, NW control contents are prepared by using path calculation means of the NW design means. By causing the vehicle to refer to the NW control contents, the vehicle does not need to have path calculation means for change of a flow, a bandwidth, a priority level, etc. on the in-vehicle network that occurs when a vehicle state is changed.

Since the NW design means previously duplicates the NW control contents of the vehicle, the same NW control contents duplicated can be applied to other vehicles having the same configuration as that of the vehicle.

By defining change of vehicle control software and change of in-vehicle components as vehicle states, the NW design means can prepare NW control contents for change of a flow, a bandwidth, a priority level, etc. on the NW of a vehicle having different software and hardware.

### [Hardware Configuration]

Next, a hardware configuration of the NW control apparatus 20 will be described.

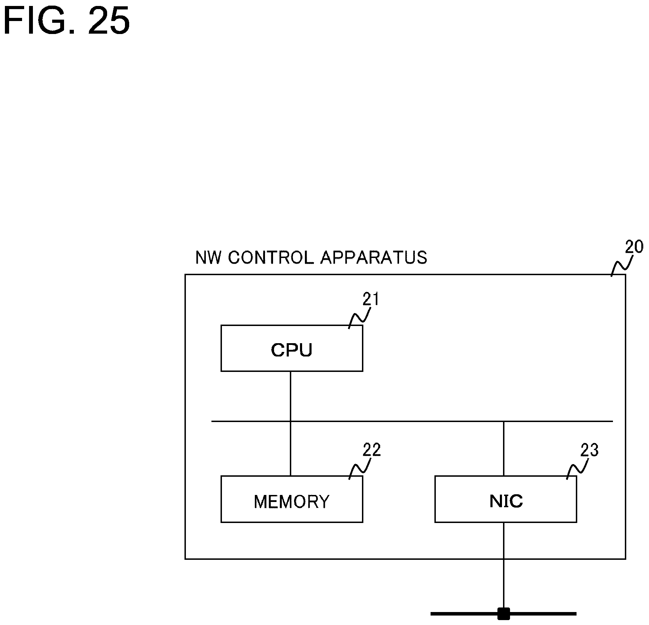

Fig. 25 is a diagram illustrating an example of a hardware configuration of the NW control apparatus 20. The NW control apparatus 20 includes an example configuration as illustrated in Fig. 25. For example, the NW control apparatus 20 includes a CPU (Central Processing Unit) 21, a memory 22, and an NIC (Network Interface Card) 23 serving as communication means, which are connected to each other via an internal bus. The configuration illustrated in Fig. 25 is not intended to limit the hardware configuration of the NW control apparatus 20. The NW control apparatus 20 may include other hardware not illustrated.

The memory 22 is a RAM (Random Access Memory), a ROM (Read Only Memory), an HDD (Hard Disk Drive), or the like.

The NIC 23 is, for example, an interface card that complies with Ethernet (registered trademark). Alternatively, if the in-vehicle network is configured by CAN, an interface card that complies with CAN is used as the NIC 23.

An individual processing module of the above NW control apparatus 20 is realized by causing the CPU 21 to execute a program stored in the memory 22, for example. This program may be updated by downloading an update program via a network or by using a storage medium in which an update program is stored. The processing modules may be realized by semiconductor chips. That is, it is possible to use any means that perform the functions of the above processing modules by using some hardware and/or software.

Since the hardware configurations of the NW design apparatus 40, the NW repeaters 32, and the NW nodes 31 are obvious to those skilled in the art, description thereof will be omitted.

While the above description has clarified the industrial applicability of the present invention, the present invention is suitably applicable to the mobility control field (automobiles, aircraft, boats and ships, robots), for example. That is, the present invention is suitably applicable to fields in which many apparatuses are manufactured/operated. The individual one of the apparatuses moves/operates while carrying a single network, and a flow, a bandwidth, a priority level, etc. of a communication in the network changes with change of the movement/operation.

The above example embodiments may partially or entirely be described, but not limited to, as the following notes.

### [Note 1]

See the in-vehicle control apparatus according to the above first aspect.

### [Note 2]

The in-vehicle control apparatus preferably according to note 1, referring to the control scenario(s) when a state(s) of the vehicle is changed and controlling the plurality of repeaters.

### [Note 3]

The in-vehicle control apparatus preferably according to note 1 or 2, visualizing a status of the vehicle network.

### [Note 4]

The in-vehicle control apparatus preferably according to any one of notes 1 to 3, monitoring presence or absence of a query(ies) about a setting(s) of a control content(s) from a repeater(s) included in the vehicle network.

### [Note 5]

The in-vehicle control apparatus preferably according to any one of notes 1 to 4; wherein the controlling on the plurality of repeaters includes at least one of path control, bandwidth control, priority level control for packet forwarding and control for rewriting packet information.

### [Note 6]

See the in-vehicle network design apparatus according to the above second aspect.

### [Note 7]

The in-vehicle network design apparatus preferably according to note 6, generating the control scenario(s) by using a virtual network that simulates the in-vehicle network.

### [Note 8]

The in-vehicle network design apparatus preferably according to note 7, evaluating the in-vehicle network by using the virtual network.

### [Note 9]

The in-vehicle network design apparatus preferably according to note 7 or 8, visualizing a status of the virtual network.

### [Note 10]

An in-vehicle network design apparatus, outputting a warning(s) when notified of a query(ies) about a setting(s) of the control content(s) by the in-vehicle control apparatus preferably according to note 4.

### [Note 11]

The in-vehicle network design apparatus preferably according to any one of notes 7 to 10; wherein the control scenario(s) is applicable to a plurality of vehicles having the same configuration as that of the in-vehicle network.

### [Note 12]

The in-vehicle control apparatus preferably according to any one of notes 1 to 5; wherein the control scenario(s) is internally and rewritably stored, and an in-vehicle network internally assembled in the vehicle being operated is updatable by changing the rewritably stored control scenario(s) from an outside of the vehicle.

### [Note 13]

The in-vehicle control apparatus according to any one of notes 1 to 5; wherein a state(s) of the vehicle is a matter(s) or an event(s) that occurs due to a vehicle-specific action(s) or operation(s).

### [Note 14]

See the communication method according to the above third aspect.

### [Note 15]

See the program according to the above fourth aspect.

The disclosure of each of the above PTLs, etc. is incorporated herein by reference thereto. Modifications and adjustments of the example embodiments and examples are possible within the scope of the overall disclosure (including the claims) of the present invention and based on the basic technical concept of the present invention. Various combinations and selections (including partial deletion) of various disclosed elements (including the elements in each of the claims, example embodiments, examples, drawings, etc.) are possible within the scope of the overall disclosure of the present invention. Namely, the present invention of course includes various variations and modifications that could be made by those skilled in the art according to the overall disclosure including the claims and the technical concept. The description discloses numerical value ranges. However, even if the description does not particularly disclose arbitrary numerical values or small ranges included in the ranges, these values and ranges should be deemed to have been specifically disclosed. In addition, as needed and based on the gist of the present invention, partial or entire use of the individual disclosed matters in the above literatures that have been referred to in combination with what is disclosed in the present application should be deemed to be included in what is disclosed in the present application, as a part of the disclosure of the present invention.

### REFERENCE SIGNS LIST

10, 10-1, 10-2 vehicle
20 NW (network) control apparatus
21 CPU (Central Processing Unit)
22 memory
23 NIC (Network Interface Card)
30 NW part
31 NW node
32, 32a, 32-1 to 32-4 NW repeater
33, 33-1 to 33-8 proximity sensor
34 collision warning device
40 NW design apparatus
100 in-vehicle control apparatus
201 NW control part
202 state management part
203 control content storage part
204 update management part
205, 305 communication part
206 NW visualization part
207 NW monitoring part
301 design information reception part
302 design information storage part
303 NW control content management part
304 NW control scenario management part
306 NW evaluation part
307 NW visualization part
308 warning part
311 virtual NW management section
312 path calculation section

## Claims

1. An in-vehicle control apparatus, controlling a plurality of repeaters included in an in-vehicle network assembled in a vehicle, based on a control scenario(s) associated with states of the vehicle and control contents, each of which is set in a corresponding one of the plurality of repeaters.

2. The in-vehicle control apparatus according to claim 1, referring to the control scenario(s) when a state(s) of the vehicle is changed and controlling the plurality of repeaters.

3. The in-vehicle control apparatus according to claim 1 or 2, visualizing a status of the in-vehicle network.

4. The in-vehicle control apparatus according to any one of claims 1 to 3, monitoring presence or absence of a query(ies) about a setting(s) of a control content(s) from a repeater(s) included in the in-vehicle network.

5. The in-vehicle control apparatus according to any one of claims 1 to 4; wherein the controlling on the plurality of repeaters includes at least one of path control, bandwidth control, priority level control for packet forwarding and control for rewriting packet information.

6. An in-vehicle network design apparatus, connectable to the in-vehicle control apparatus according to any one of claims 1 to 5 and generating the control scenario(s).

7. The in-vehicle network design apparatus according to claim 6, generating the control scenario(s) by using a virtual network that simulates the in-vehicle network.

8. The in-vehicle network design apparatus according to claim 7, evaluating the in-vehicle network by using the virtual network.

9. A communication method for an in-vehicle control apparatus for a vehicle in which a vehicle network including a plurality of repeaters is assembled, the communication method comprising steps of:
referring to a control scenario(s) associated with states of the vehicle and control contents, each of which is set in a corresponding one of the plurality of repeaters; and
controlling the plurality of repeaters based on the control scenario(s).

10. A program, causing a computer for a vehicle in which a vehicle network including a plurality of repeaters is assembled to perform processing for:
referring to a control scenario(s) associated with states of the vehicle and control contents, each of which is set in a corresponding one of the plurality of repeaters, are associated with each other; and
controlling the plurality of repeaters based on the control scenario(s).
